# EUROPEAN PATENT APPLICATION

(11) **EP 1 645 782 A2**
(43) Date of publication of application: **12.04.2006**
(21) Application number: 05021194.5
(22) Date of filing: 28.09.2005
(51) Int. Cl.: F16H 55/30

(54) **Elastomer cushion ring for a random tooth roller chain sprocket**

(30) Priority: 06.10.2004 US 959738
(71) Applicant: BorgWarner Inc., Auburn Hills MI 48326 (US)
(72) Inventor: Haesloop, Christian J., Ithaca, New York 14850 (US)
(74) Representative: Petruzziello, Aldo

(57) **Abstract**

A sprocket (10) is provided with a plurality of teeth (12) spaced about its periphery, the sprocket (10) including roots located between pairs of adjacent teeth. The roots have root radii defined as the distance between the center of sprocket (10) and the point along the root closest to the sprocket center in the radial direction. Roots have three distinct radii, a cushioning material (14) for receiving the impact while engaging a chain has a geometry means substantially following the contours of the sprocket teeth geometry.

## Description

### FIELD OF THE INVENTION

The invention pertains to the field of cushion rings. More particularly, the invention pertains to elastomer cushion rings that are bonded to at least one side of a random tooth roller chain sprocket.

### BACKGROUND OF THE INVENTION

Randomized sprockets for roller chain are known. United States Patent No. 6,155,943, which is hereby incorporated herein by reference, discloses a roller chain and sprocket drive with a randomized sprocket which modulates the roller position on the sprocket by varying the radial seating position of the roller while maintaining a constant chordal dimension between seated rollers. The roots between teeth of the sprocket have radii that vary between a nominal radius and a maximum radius and a minimum radius. This variation or randomization is intended to provide a noise modulation effect while avoiding the negative effects of high impact from conventional randomized sprockets.

It is also known to use roller chain sprockets, which are oriented to minimize strand length variation of the chain. United States Patent No. 6,213,905, which is hereby incorporated herein by reference, discloses a roller chain and sprocket drive which has at least two sprockets with varied radial seating positions. The relative orientation of the sprockets are adjusted to provide favorable dynamics to the drive. This can include the minimization of the strand variation and providing the maximum strand variation for each chain strand to be phased differently than other strands.

Elastomer cushion rings are also known for conventional, equally tooth spaced sprockets. United States patent Application No.20030176251 teaches a method for installing a cushion ring on a sprocket body to construct a sprocket assembly includes applying a deforming force to a cushion ring so that an opening therein is deformed to a shape that accommodate passage of a non-circular flange of a sprocket body therethrough. When the cushion ring is deformed, the non-circular flange of the sprocket body is inserted through the opening of the cushion ring. The deforming force is then released from the cushion ring so that the cushion ring is trapped between the flange and another portion of the sprocket body. The sprocket assembly includes at least one and typically two cushion rings trapped by respective non-circular flanges.

United States patent Application No.20020169044 teaches a sprocket includes a hub and a plurality of teeth projecting radially outwardly from the hub. At least one cushion ring is located adjacent the teeth, and the cushion ring defines a plurality of compression pads separated from each other by transverse grooves. Each of the compression pads is defined symmetrically about a circumferential mid-point. When part of a sprocket with symmetric tooth spaces, the cushion ring is being operable identically in first and second opposite rotational directions. In one arrangement, the compression pads each include a planar outer surface having a leading and a trailing end, wherein the leading end and trailing end are located a common radial distance from a center of the hub about which the sprocket rotates. The tooth spaces of the sprocket can be symmetric, asymmetric and the root surface can be relieved. The sprocket can include multiple tooth profiles distributed randomly about the hub.

United States Patent No. 6,371,875 discloses a roller chain sprocket includes a number of sprocket teeth each having an engaging flank and a disengaging flank. An engaging flank of a first tooth of the sprocket cooperates with a disengaging flank of a second tooth to define a tooth space having a root surface extending between the engaging flank and the disengaging flank. The root surface has a first root surface portion defined by a first radius extending from an arc center of the first root surface portion. A cushion ring is mounted to a first face of the sprocket and has a number of alternating compression pads and grooves. A first groove has a first groove portion defined by a second radius extending from an arc center of the first groove portion. The arc center of the first groove portion being positioned at least proximate a radial line extending between a center of the sprocket and the arc center of the first root surface portion. A first compression pad having an inclined outer surface defined by a leading edge that is spaced radially inward relative to a trailing edge. The leading edge is also positioned radially inward from the engaging flank of the first tooth, and the trailing edge is positioned radially inward from a disengaging flank of the first tooth.

United States Patent No. 6,179,741 discloses a roller chain sprocket includes a number of sprocket teeth each having an engaging flank and a disengaging flank. An engaging flank of a first tooth of the sprocket cooperates with a disengaging flank of a second tooth to define a tooth space having a root surface extending between the engaging flank and the disengaging flank. The root surface has a first root surface portion defined by a first radius extending from an arc center of the first root surface portion. A cushion ring is mounted to a first face of the sprocket and has a number of alternating compression pads and grooves. A first groove has a first groove portion defined by a second radius extending from an arc center of the first groove portion. The arc center of the first groove portion being positioned at least proximate a radial line extending between a center of the sprocket and the arc center of the first root surface portion. A first compression pad having an inclined outer surface defined by a leading edge that is spaced radially inward relative to a trailing edge. The leading edge is also positioned radially inward from the engaging flank of the first tooth, and the trailing edge is positioned radially inward from a disengaging flank of the first tooth.

As can be seen, the above listed prior art sprocket tooth angular spacing is repetitive and is equal to 360 degrees divided by the number of sprocket teeth. Repetitive sprocket tooth spacing is known to create undesirable chain engagement noise having orders that are related to the number of sprocket teeth. A random tooth sprocket has both irregular angular spacing and varying pitch radii of the sprocket teeth which disrupts the repetitive chain engagement noise orders.

Therefore, it is desirable to have cushion ring material to follow the irregular geometry of the random sprocket teeth such that each chain engagement has a predetermined amount of interference with the roller chain pin links and bush links.

### SUMMARY OF THE INVENTION

A random tooth sprocket having contoured elastomer cushion ring having elastomer material affixed onto each side of a random tooth roller chain sprocket is provided.

A random tooth sprocket having contoured elastomer cushion ring having at least one cushion ring geometry each having a predetermined amount of interference with the roller chain pin links and bush links is provided. The different cushion ring geometries each changes the amount of interference with the chain for each incremental rotation of the sprocket. Full interference occurs at full chain engagement. The interference can occur abruptly or gradually during chain engagement. This can be used for tuning the noise, vibration and harshness (NVH) levels while minimizing negative effects. Negative effects includes durability concerns (e.g. tearing of the cushioning means) from too large an interference or applying the interference abruptly.

A random tooth sprocket having contoured elastomer cushion ring having chain pin and bush links compress the elastomer material during chain engagement to the sprocket is provided.

A random tooth sprocket having contoured elastomer cushion ring having the elastomer material reduces chain roller and/or bushing engagement impact forces thereby reducing noise and increases roller/bushing fatigue life.

Accordingly, a sprocket comprising a plurality of teeth spaced about its periphery, said sprocket including roots located between pairs of adjacent teeth is provided. Each of said roots have a root radius defined as the distance between the center of said sprocket and the point along said root closest to the sprocket center in the radial direction, and at least one of said roots have a first root radius, at least one of said roots have a second root radius, said second root radius being less than said first root radius. The first root radius and the second root radius are defined so that the distance between the centers of adjacent rollers will be substantially equal along the rollers seated in the sprocket roots. The sprocket further includes a cushioning material for receiving the impact while engaging a chain having a geometry means substantially following the contours of the sprocket teeth geometry.

### BRIEF DESCRIPTION OF THE DRAWING

Fig. 1 shows a frontal view random tooth sprocket having contoured elastomer cushion ring of the present invention.
Fig. 2 shows a first alternative embodiment of the present invention.
Fig. 3 shows a second alternative embodiment of the present invention.
Fig. 4 shows a third alternative embodiment of the present invention.
Fig. 5 shows a fourth alternative embodiment of the present invention.
Fig. 6 shows a fifth alternative embodiment of the present invention.
Fig. 7 shows a sixth alternative embodiment of the present invention.
Fig. 8 shows a seventh alternative embodiment of the present invention.
Fig. 9 shows a side view of the present invention.

### DETAILED DESCRIPTION OF THE INVENTION

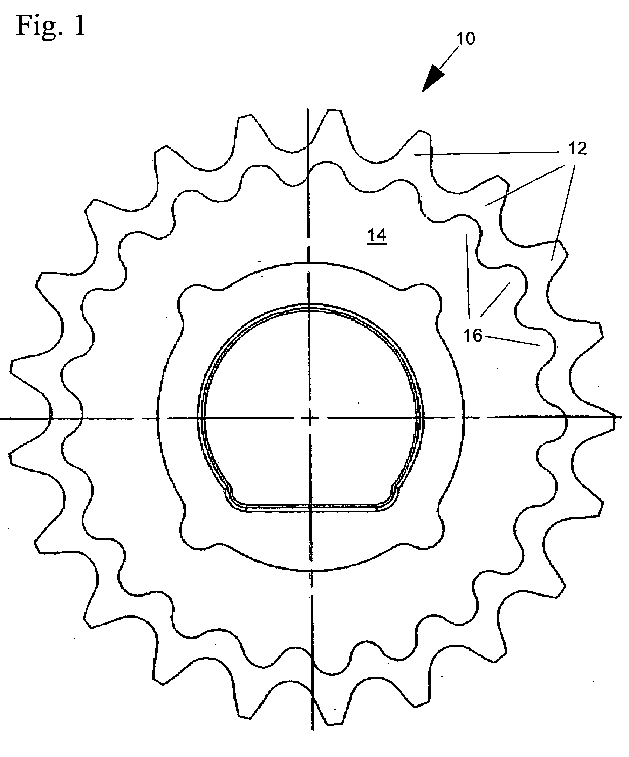

Referring to Figs. 1-9, a random tooth chain sprocket 10 having a set of teeth 12 circumferentially distributed upon its circumference is shown. Random tooth chain sprocket 10 may be used in conjunction with a roller chain 13 having random tooth chain sprocket 10 with a plurality of roots with the first root radius and a plurality of roots with the second root radius. The roots having the first root radius are randomly arranged with the roots having the second root radius in a predetermined pattern about the random tooth chain sprocket 10 periphery. By randomly arranged, it is meant that the pattern is staggered between first and second radii, and not a pure alternating pattern between first and second radii. For detailed description of the random tooth sprocket, refer to United States Patent No. 6,155,943, which is hereby incorporated herein by reference. A random sprocket comprises two or more radii for locating the tooth roots. In the preferred embodiment of the present invention, three tooth roots are used.

As the rollers of a known roller chain 13 move from seat to seat between the set of teeth 12, the radial position at which the rollers seat varies from maximum radius to nominal radius to minimum radius. The angular displacement of the sprocket is the angular distance between the center of the roller in one seat and the center of the roller in an adjacent seat. The angular displacement is effectively altered from seat to seat around the random tooth chain sprocket 10. The roller chain 13 comprises chain pin and bush links.

Cushion material 14 is affixed onto such as bonded to at least one side of random tooth chain sprocket 10. Cushion material 14 geometry has a predetermined amount of interference with the roller chain 13 pin links and bush links. The chain pin and bush links compress the elastomer material 14 during chain 13 engagement to the sprocket. The elastomer material 14 reduces chain roller and/or bushing engagement impact forces which reduces noise and increases roller/bushing fatigue life. The elastomer material 14 may include, but are not limited to, various heat- and oil-resistant nonhalogen synthetic rubbers, hydrogenated nitrile butadiene rubber (HNBR), partially or completely hydrogenated acrylonitrile-butadiene rubber, or polyacrylate (ACM).

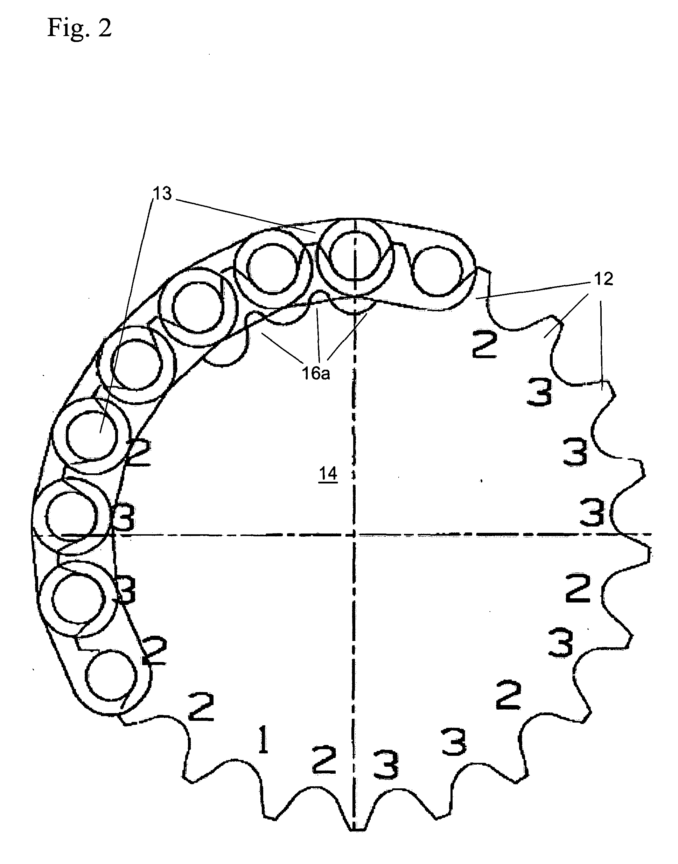

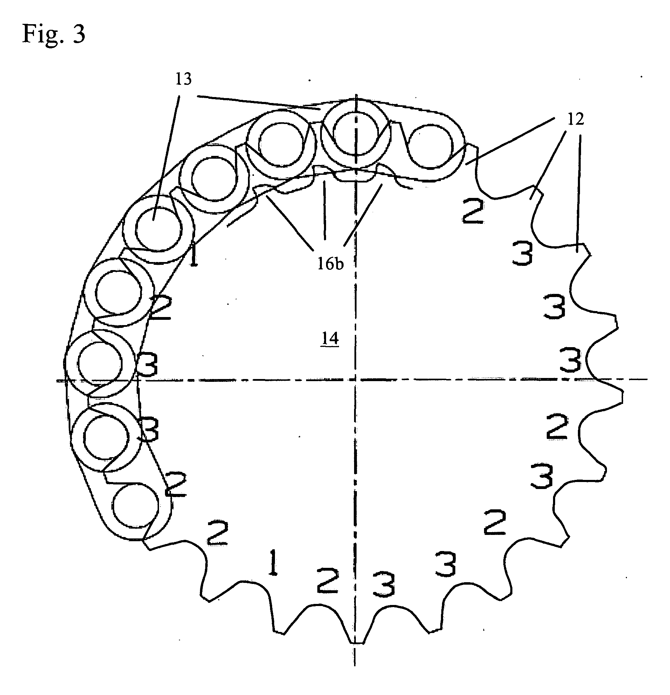

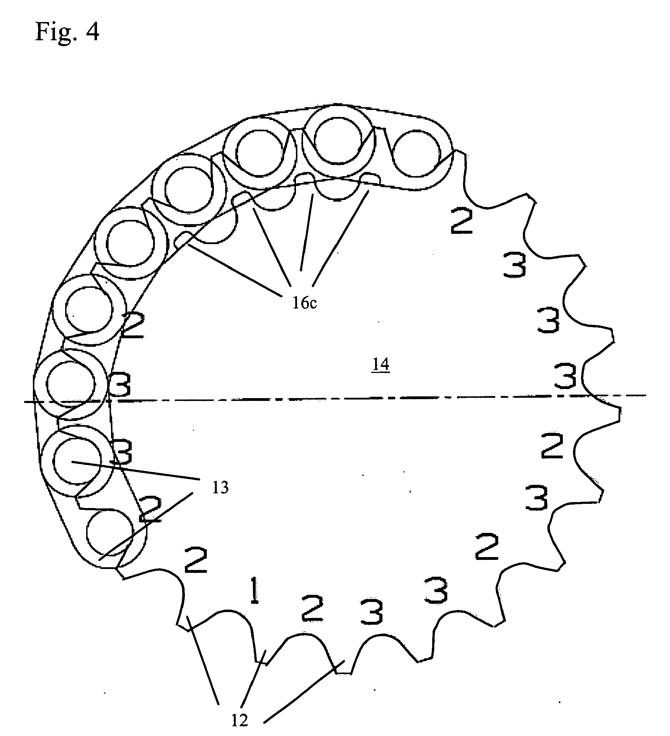

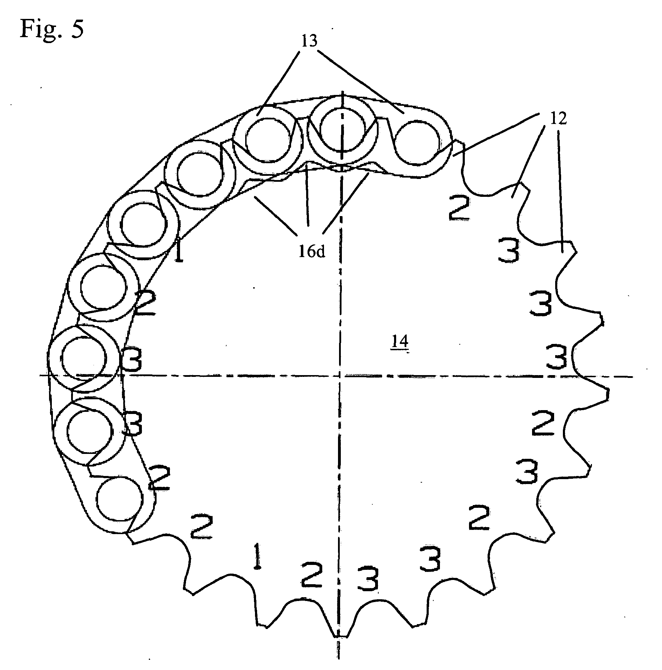

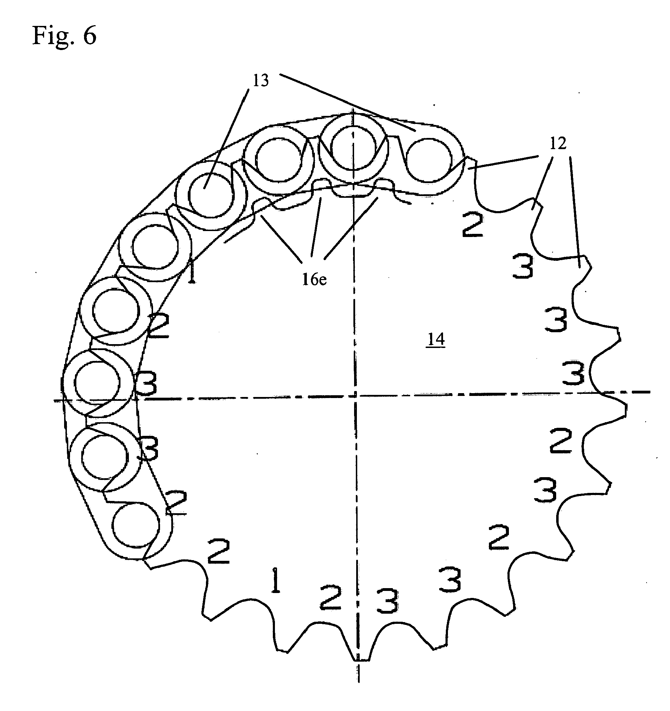

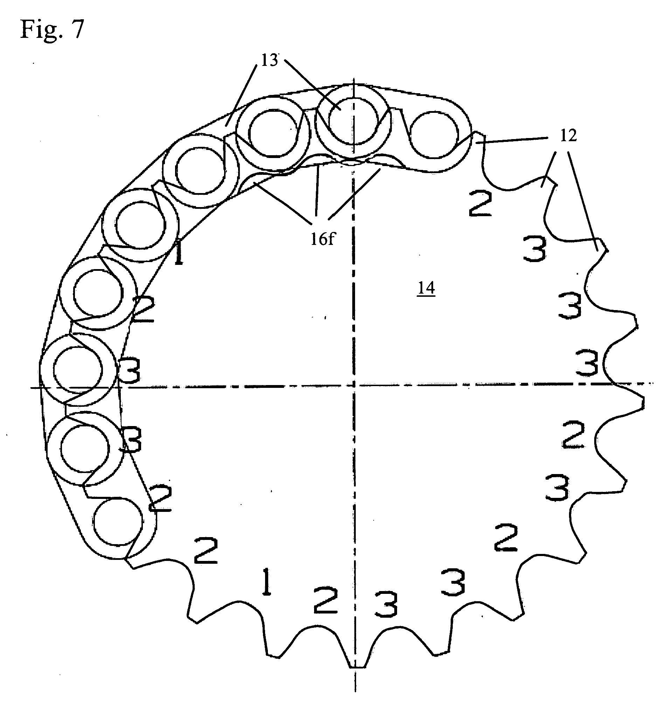

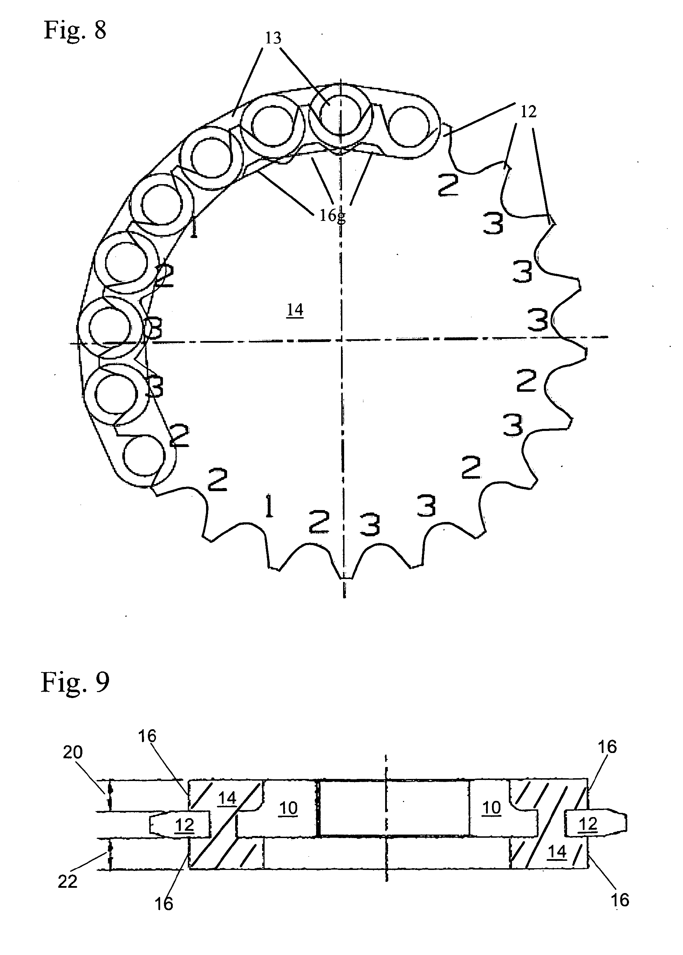

Elastomer material 14 has a contoured edge or circumference, which is termed cushioning means 16. The geometry of the cushioning means 16 material follows the irregular geometry of the random sprocket teeth 12 such that each chain 13 engagement has a predetermined amount of fully engaged chain interference with the chain pin links and bush links. The geometry of the cushioning means 16 is also designed to vary the rate of chain interference as the chain enters and exits engagement with the sprocket 10. Therefore, cushioning means 16 may have various geometric shapes or contours. For example, see respectively the first shape 16a of Fig. 2, second shape 16b of Fig. 3, third shape 16c of Fig. 4, fourth shape 16d of Fig. 5, fifth shape 16e of Fig. 6, sixth shape 16f of Fig. 7, and seventh shape 16g of Fig. 8. The purpose of the various shapes of cushioning means 16 is to tune the sprocket and chain engagement system. Tuning may be necessary to achieve optimum noise, vibration and harshness (NVH) levels improvement and at the same time minimize any negative effects such as increased chain load or cushion means 16 durability or elastomer material 14 compression set from chain 13 engagement forces necessary to compress the cushion ring. Clearance relief geometry is positioned adjacent to each interference geometry. Each adjacent clearance relief provides a space to accept the deflected cushion ring material 14 especially the cushioning means 16 portion. The geometry and amount of cushioning means 16 interference as well as the geometry and amount of cushioning means 16 clearance relief may be altered to achieve optimum system performance. As can be seen, the various cushion ring geometries affects the rate of interference as the chain comes into and out of sprocket engagement as well as total interference with a fully engaged chain.

Cushioning means 16 of Fig. 9 may have a first thickness 20 and a second thickness 22 on each side of random tooth chain sprocket 10 respectively. Thickness 20 and thickness 22 must be wide enough to allow sufficient contact of the chain 13 bush link plates and pin link plates within the permissible side to side movement of the chain 13 on the sprocket 10. A set of holes in a flange of random tooth chain sprocket 10 may be provided for the cushioning material 14 to pass through random tooth chain sprocket 10.

At least two radii, radius 1 and radius 2 are provided for random tooth chain sprocket 10. A third radii 3 may also be provided. One relationship between the three radii is that radius 1 is greater in length than radius 2. Radius 2 is greater in length than radius 3. The geometry of random tooth chain sprocket 10 substantially follows the relationship between the three radii.

It should be noted that the pitch distance (or chordal length) between seated rollers remains constant. Maintaining a constant chordal length reduces the impact load of the rollers against the teeth. The variation in the seating position from tooth to tooth results in a modulation of the timing of successive impacts. This modulation reduces the pitch frequency noise produced by the chain drive.

The design of the present invention is directed to maintaining the engagement (or seating) of the roller with the root of the sprocket 10, but changing the position of the root radially from tooth to tooth is random. That is, it varies irregularly around the sprocket. 10 Preferably, the pattern does not contain any abrupt transitions from the upper seating or the lower seating positions to the other extreme position without passing through the nominal seating position for at least one tooth. Avoidance of abrupt transitions should contribute to the smooth running of the chain 13 and reduce the generation of mechanical noise and reduce wear on the rollers.

In other words, the present invention provides a contoured cushioning material geometry means 16-16g to substantially follow the contours of the sprocket teeth 12 geometry. The contoured cushioning material geometry mean 16-16g has uneven edges circumferentially following the first, the second radii, and the third radii.

In order to generate the profile of the sprocket 10 of the present invention, the location of the seating radius of each root (or the space between sprocket teeth 12 in which the rollers seat) must be determined. While locating the seating position of each roller, the pitch distance between seated rollers must remain constant.

Elastomer material 14 may be bonded to each side of a random tooth roller chain 13 sprocket 10. The cushion ring geometry 16 has a predetermined amount of interference with the roller chain pin links and bush links. The chain pin and bush links compress the elastomer material 14 especially the ring geometry 16 portion during chain 13 engagement to the sprocket 10. The elastomer material 14 reduces chain roller and/or bushing engagement impact forces which reduces noise and increases roller/bushing fatigue life.

Conventional sprocket tooth (not shown) angular spacing is repetitive and is equal to 360 degrees divided by the number of sprocket teeth. Repetitive sprocket tooth spacing creates undesirable chain engagement noise orders that are related to the number of sprocket teeth. A random tooth sprocket 10 has both irregular angular spacing and varying pitch radii of the sprocket teeth 12 which disrupts the repetitive chain engagement noise orders.

Random sprocket 10 is not limited to three different radii. A random sprocket such as sprocket 10 can have as few as two radii or a plurality of radii greater than three.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A sprocket comprising:
a chain-driving body comprising
a plurality of teeth spaced about a periphery of the body, with roots located between pairs of adjacent teeth having a root radius defined as the distance between the center of the sprocket and the point along the root closest to the sprocket center in the radial direction;
at least one of the roots having a first root radius, at least one of the roots having a second root radius, the second root radius being less than the first root radius; and
a cushioning material portion affixed onto the structural portion for receiving an impact of links of a chain driven by the body having a contour substantially corresponding to the sprocket teeth roots.

2. The sprocket of claim 1, wherein the cushioning material portion is bonded to the structural portion.

3. The sprocket of claim 1, wherein a plurality of the roots have the first root radius and a plurality of roots have the second root radius, the roots having the first root radius being arranged with the roots having the second root radius in a predetermined pattern about the sprocket periphery.

4. The sprocket of claim 1, wherein a plurality of roots have a third root radius, the third root radius being less than the second root radius.

5. The sprocket of claim 4, wherein the roots having the third root radius arranged with the roots having the first root radius and the roots having the second root radius in a predetermined pattern about the sprocket periphery.

6. The sprocket of claim 5, wherein the predetermined pattern is arranged so that at least one root having the second root radius is always between a root having the first radius and a root having the third radius.
